# FASCICULE DE BREVET EUROPEEN

(11) **EP 1 462 608 B1**
(45) Date de publication et mention de la délivrance du brevet: **19.07.2006**
(21) Numéro de dépôt: 04290660.2
(22) Date de dépôt: 11.03.2004
(51) Int. Cl.: F01D 5/14, F01D 9/04

(54) **Aube de redresseur à double courbure**
Statorschaufel mit Doppelkrümmung
Stator vane with double curvature

(30) Priorité: 27.03.2003 FR 0303754
(43) Date de publication de la demande: 29.09.2004
(73) Titulaire: SNECMA, 75015 Paris (FR)
(72) Inventeur: Fessou, Philippe, 77000 Melun (FR); Blozovski, Mario, 91800 Boussy-saint-Antoine (FR); Quiniou, Hervé, 91450 Mennecy (FR)
(74) Mandataire: Boura, Olivier

(56) Documents cités:
- EP-A- 0 441 097
- EP-A- 1 098 092
- EP-A- 1 106 836
- US-A- 3 745 629
- US-B1- 6 195 983
- US-B1- 6 491 493

## Description

### Arrière-plan de l'invention

La présente invention se rapporte au domaine général des moteurs à turbine à gaz, et plus particulièrement aux compresseurs de ces moteurs.

Un moteur à turbine à gaz comprend une section de combustion et une section de turbine disposée en aval d'une section de compression. Un passage annulaire pour l'écoulement d'un flux gazeux s'étend axialement en travers de ces différentes sections du moteur. Le flux gazeux est comprimé par la section de compression avant d'être mélangé et brûlé avec un combustible dans la section de combustion. Les gaz issus de cette combustion traversent ensuite la section de turbine afin de fournir une poussée de propulsion et d'entraîner les turbines. Les éléments de la section de compression sont fixés de façon rotative sur les turbines par un arbre d'entraînement.

La section de compression d'un moteur à turbine à gaz peut comporter trois compresseurs axiaux afin d'augmenter la compression du flux gazeux : une soufflante, un compresseur basse-pression et un compresseur haute-pression. Chaque compresseur est typiquement constitué d'une partie tournante (le rotor), d'une partie fixe (le stator) et d'une enveloppe (le carter). Une virole interne du rotor et une virole externe du stator délimitent radialement la veine annulaire d'écoulement du flux gazeux traversant le compresseur. Le rotor comprend une pluralité de rangées d'aubes mobiles qui s'étendent radialement en travers de la veine d'écoulement depuis la virole interne jusqu'à proximité de la virole externe. Le stator comporte une pluralité de rangées d'aubes fixées sur la virole externe et qui s'étendent également en travers de la veine d'écoulement entre la virole externe jusqu'à la virole interne. Chaque rangée d'aubes fixes formant un redresseur est disposée entre deux rangées successives d'aubes mobiles du rotor. Les aubes fixes de redresseur permettent de guider le flux gazeux issu des rangées d'aubes mobiles selon une vitesse et angle appropriés. Chaque aube fixe est constituée d'une pluralité de sections alignées le long d'un axe d'empilage et formant le profil de l'aube.

En fonctionnement normal du moteur, la rotation de l'arbre d'entraînement de la section de compression engendre un phénomène de balourd. Ce balourd créé des charges cycliques et des vibrations que le rotor communique au stator du moteur avec d'importants risques de détérioration de ce dernier. Au niveau des compresseurs, ce phénomène de balourd se traduit par un mouvement orbital de la virole interne dû à sa rotation. Ce mouvement orbital de la virole interne se transmet par contact aux aubes fixes de redresseur sous la forme d'un déplacement radial ce qui a pour conséquence de déformer la virole externe sur laquelle sont fixées ces aubes. Par ailleurs, les aubes fixes de redresseur soumises à un tel déplacement radial se courbent et risquent de casser (phénomène de flambage).

Afin de se prémunir d'une déformation trop importante de la virole externe et d'éviter une cassure des aubes de redresseur, celles-ci présentent généralement un profil ayant une courbure en « C » (aussi appelée « voile de bateau ») comme décrit dans le document EP 1 098 092. Une tette géométrie se caractérise par un décalage tangentiel des sections d'aube situées au milieu de la veine d'écoulement par rapport aux sections inférieures et supérieures proches des viroles interne et externe ce qui permet de diminuer la résistance des aubes de redresseur au flambage. L'aube constituée par l'empilage de telles sections est plus souple et peut donc absorber une partie de l'énergie de déformation transmise par la virole interne.

Néanmoins, une courbure en voile de bateau pénalise les performances aérodynamiques du compresseur, notamment en matière de marge au pompage. La déformation en flèche tangentielle de l'aube a pour effet de diminuer l'angle de raccord entre l'aube et les viroles externe et interne ce qui, au-delà d'une certaine valeur, pénalise l'aérodynamique du compresseur. En effet, le flux gazeux traversant le redresseur a tendance à migrer des sections inférieures et supérieures des aubes vers le centre de celles-ci. Cette migration du flux est particulièrement préjudiciable pour la marge au pompage au niveau du pied de l'aube (sections inférieures).

On connaît de US 6 195 383 une aube de distributeur de soufflante dont l'axe d'empilage présente des courbures dans les parties inférieure et supérieure. On connaît aussi de US 3 745 629 une aube fixe de compresseur ayant une forme de "S".

### Objet et résumé de l'invention

La présente invention vise donc à pallier de tels inconvénients en proposant une nouvelle géométrie d'aube de redresseur ayant une résistance au flambage diminuée sans pour autant pénaliser les performances aérodynamiques du redresseur.

A cet effet, il est prévu une aube telle que définie par la revendication 1.

Un tel empilage de sections d'aube permet ainsi de conserver un angle de raccord entre l'aube et les viroles favorable à la marge au pompage du compresseur tout en augmentant le décalage tangentiel de la partie intermédiaire de l'aube afin d'assouplir l'aube au flambage. En effet, les parties inférieure et supérieure de l'aube qui présentent une composante tangentielle sensiblement radiale empêchent le flux gazeux traversant le compresseur de trop migrer vers la partie intermédiaire même en cas de déformation de l'aube. Le décalage tangentiel de la partie intermédiaire de l'aube permet par ailleurs de diminuer la résistance au flambage de l'aube.

De préférence, la composante tangentielle de l'axe d'empilage, au niveau de la partie intermédiaire, comporte une première courbure dans le sens inverse de rotation du disque et une seconde courbure dans le sens de rotation dudit disque. La première courbure peut présenter une inclinaison comprise entre 5° et 45° et la seconde courbure peut présenter une inclinaison également comprise entre 5° et 45°.

De façon avantageuse, la composante tangentielle de l'axe d'empilage de la partie intermédiaire de l'aube s'étend sur une hauteur radiale comprise entre 35% et 65% d'une hauteur radiale totale entre le pied et le sommet de l'aube.

De façon encore avantageuse, la composante tangentielle de l'axe d'empilage de la partie inférieure de l'aube s'étend sur une hauteur radiale comprise entre 10% et 25% de la hauteur radiale totale entre le pied et le sommet de l'aube. De même, la composante tangentielle de l'axe d'empilage de la partie supérieure de l'aube s'étend avantageusement sur une hauteur radiale comprise entre 10% et 25% de la hauteur radiale totale entre le pied et le sommet de l'aube.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue partielle et en coupe longitudinale d'une section de compression d'un moteur à turbine à gaz ;
- la figure 2 est une vue en perspective et partielle d'une section de compression comportant des aubes de redresseur selon l'invention ; et
- la figure 3 représente schématiquement un axe tangentiel d'empilage des sections d'une aube selon l'invention.

### Description détaillée d'un mode de réalisation

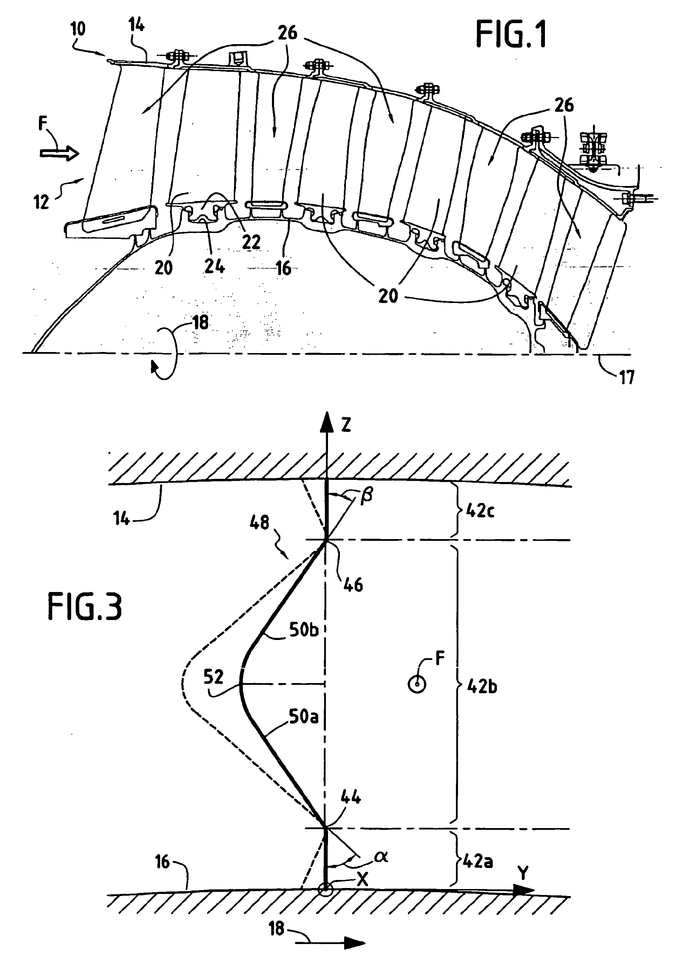

La figure 1 représente partiellement une section de compression 10 équipant les moteurs à turbine à gaz. Cette section de compression présente une veine annulaire 12 d'écoulement des flux gazeux qui s'étend axialement à travers la section de compression et radialement entre une virole externe 14 d'un stator et une virole interne 16 d'un disque de rotor. La virole interne est mise en rotation autour d'un axe longitudinal 17 du moteur dans le sens indiqué par la flèche 18, tandis que la virole externe reste fixe. La direction d'écoulement des flux gazeux traversant la section de compression est représentée par la flèche F.

Le disque de rotor comprend une pluralité de rangées d'aubes mobiles 20 qui s'étendent radialement en travers de la veine d'écoulement 12 depuis la virole interne 16 jusqu'à proximité de la virole externe 14. Chaque aube mobile 20 présente un pied 22 en forme de queue d'aronde qui vient s'emmancher dans un évidement 24 ménagé à cet effet dans la virole interne 16. Le stator comporte une pluralité de rangées d'aubes de redresseurs 26 fixées sur la virole externe 16 et qui s'étendent également en travers de la veine d'écoulement entre la virole interne jusqu'à la virole interne 14. Chaque aube 26 de redresseur est formée en une seule pièce avec la virole externe 16. Alternativement, les aubes 26 de redresseur pourraient également comporter un pied venant s'emmancher dans des évidements de la virole externe.

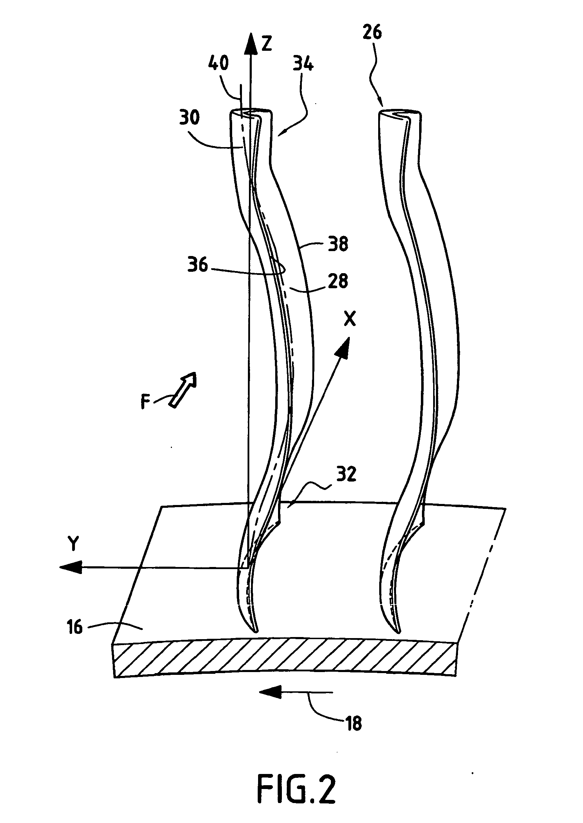

Comme illustré sur la figure 2, chaque aube 26 de redresseur est munie de trois axes orthogonaux : un axe longitudinal X, un axe tangentiel Y et un axe radial Z. L'axe longitudinal X s'étend dans la direction d'écoulement F du flux gazeux traversant la section de compression. L'axe tangentiel Y s'étend dans la direction de rotation 18 de la virole interne 16 et l'axe radial Z s'étend radialement depuis la virole interne 16 vers la virole externe.

Chaque aube 26 de redresseur comporte une surface intrados 28 et une surface extrados 30 s'étendant, d'une part radialement entre un pied 32 et un sommet 34, et d'autre part axialement entre un bord d'attaque 36 et un bord de fuite 38. L'aube 26 de redresseur est en outre constituée d'une pluralité de sections d'aube (non représentées sur les figures) dont les centres de gravité sont empilés le long d'un axe d'empilage 40 depuis le pied 32 jusqu'au sommet 34 de l'aube.

Sur la figure 3, l'aube est décomposée, selon son axe radial Z, en trois parties : une partie inférieure 42a, une partie intermédiaire 42b et une partie supérieure 42c. La partie inférieure 42a s'étendant radialement depuis le pied de l'aube jusqu'à une limite inférieure 44 de la partie intermédiaire 42b et la partie supérieure 42c s'étendant radialement depuis cette limite supérieure 46 de la partie intermédiaire jusqu'au sommet de l'aube.

La figure 3 représente un axe tangentiel d'empilage d'une aube de redresseur de la figure 2. Plus précisément, l'axe 48 illustré sur cette figure correspond à une composante tangentielle de l'axe d'empilage 40 de la figure 2 tel que projeté dans le plan défini par les axes tangentiel Y et radial Z de l'aube.

Selon l'invention, l'axe d'empilage 40 des sections de l'aube 26 de redresseur présente, au niveau des parties inférieure 42a et supérieure 42c de l'aube, une composante tangentielle 48 sensiblement radiale et, au niveau de la partie intermédiaire 42b, une composante tangentielle 48 à double courbure. Comme illustré sur la figure 3, la composante tangentielle 48 de l'axe d'empilage 40 des parties inférieure 42a et supérieure 42c de l'aube s'étend parallèlement à l'axe radial Z de l'aube. De plus, la composante tangentielle 48 de l'axe d'empilage de la partie intermédiaire 42b de l'aube présente une première courbure 50a au niveau de sa limite inférieure 44 et une seconde courbure 50b au niveau de sa limite supérieure 46. De préférence, la première courbure 50a s'effectue dans le sens inverse de rotation 18 de la virole interne 16, tandis que la seconde courbure 50b est réalisée dans le sens de rotation 18.

Selon une caractéristique avantageuse de l'invention, la première courbure présente une inclinaison α comprise entre 5° et 45° et la seconde courbure possède une inclinaison β comprise également entre 5° et 45°.

La première courbure 50a s'étend radialement entre la limite inférieure 44 de la partie intermédiaire 42b de l'aube jusqu'à un point d'inflexion 52 de la composante tangentielle de l'axe d'empilage et la seconde courbure 50b s'étend radialement depuis ce point d'inflexion jusqu'à la limite supérieure 46 de la partie intermédiaire. Avantageusement, la composante tangentielle 48 de l'axe d'empilage de la partie intermédiaire 42b de l'aube s'étend sur une hauteur radiale comprise entre 35% et 65% de la hauteur radiale totale entre le pied et le sommet de ladite aube.

Selon une autre caractéristique avantageuse de l'invention, la composante tangentielle 48 de l'axe d'empilage de la partie inférieure 42a de l'aube s'étend sur une hauteur radiale comprise entre 10% et 25% de la hauteur radiale totale entre le pied et le sommet de ladite aube. De même, la composante tangentielle 48 de l'axe d'empilage de la partie supérieure 42c de l'aube s'étend avantageusement sur une hauteur radiale comprise entre 10% et 25% de la hauteur radiale totale entre le pied et le sommet de ladite aube.

L'aube de redresseur selon l'invention présente une meilleure résistance aux contraintes mécaniques auxquelles elle est soumise et conserve des performances aérodynamiques acceptables. La diminution de la résistance au flambage de l'aube est notamment illustrée par la figure 3 sur laquelle est représentée, en pointillés, la déformation que peut subir l'aube sans pour autant casser. Ainsi, en cas de balourd, les aubes de redresseur absorbent une partie importante de l'énergie de déformation transmise par la virole interne ce qui permet de limiter toute détérioration de la virole externe. En évitant de transposer des efforts mécaniques trop importants sur les parties fixes du moteur, il est alors possible de réduire les dimensions de ces parties fixes. Sur la figure 3, on remarque également, qu'au niveau des parties inférieure et supérieure de l'aube, la déformation que peut subir l'aube ne diminue que faiblement l'angle entre l'aube et les viroles externe et interne. Cette limitation de l'angle entre l'aube et les viroles empêche le flux gazeux traversant le redresseur de trop migrer vers la partie intermédiaire de l'aube de façon à conserver des performances aérodynamiques acceptables.

## Revendications

1. Aube fixe de redresseur pour compresseur de turbomachine ayant des axes orthogonaux longitudinal (X), tangentiel (Y) et radial (Z), ladite aube comprenant des surfaces intrados (28) et extrados (30) s'étendant radialement entre un pied (32) et sommet (34) et longitudinalement entre un bord d'attaque (36) et un bord de fuite (38), et une pluralité de sections d'aube dont les centres de gravité sont alignés le long d'un axe d'empilage (40), ladite aube présentant une partie inférieure (42a), une partie intermédiaire (42b) et une partie supérieure (42c), ladite partie inférieure s'étendant radialement entre le pied (32) de l'aube et une limite inférieure (44) de la partie intermédiaire et ladite partie supérieure s'étendant radialement entre une limite supérieure (46) de la partie intermédiaire et le sommet (34) de l'aube, **caractérisée en ce que** l'axe d'empilage (40) présente, au niveau des parties inférieure et supérieure, une composante tangentielle (48) qui s'étend parallèlement à l'axe radial de l'aube et, au niveau de la partie intermédiaire, une composante tangentielle (48) à double courbure en forme de C.

2. Aube selon la revendication 1, **caractérisée en ce que** la composante tangentielle (48) de l'axe d'empilage, au niveau de ladite partie intermédiaire (42b), comporte une première courbure (50a) dans le sens inverse de rotation du disque et une seconde courbure (50b) dans le sens de rotation dudit disque.

3. Aube selon la revendication 2, **caractérisée en ce que** ladite première courbure (50a) présente une inclinaison (α) comprise entre 5° et 45° par rapport à l'axe radial (z) de l'aube.

4. Aube selon l'une des revendications 2 et 3, **caractérisée en ce que** ladite seconde courbure (50b) présente une inclinaison (β) comprise entre 5° et 45° par rapport à l'axe radial (z) de l'aube.

5. Aube selon l'une quelconque des revendications 2 à 4, **caractérisée en ce que** ladite première courbure (50a) s'étend radialement entre la limite inférieure (44) de la partie intermédiaire (42b) et un point d'inflexion (52) situé entre les limites inférieure et supérieure (46) de ladite partie intermédiaire, et ladite seconde courbure (50b) s'étend radialement entre ledit point d'inflexion et ladite limite supérieure.

6. Aube selon la revendication 5, **caractérisée en ce que** la composante tangentielle (48) de l'axe d'empilage de la partie intermédiaire (42b) s'étend sur une hauteur radiale comprise entre 35% et 65% d'une hauteur radiale totale entre le pied (32) et le sommet (34) de ladite aube.

7. Aube selon l'une quelconque des revendications 1 à 6, **caractérisée en ce que** la composante tangentielle (48) de l'axe d'empilage de la partie inférieure (42a) s'étend sur une hauteur radiale comprise entre 10% et 25% d'une hauteur radiale totale entre le pied (32) et le sommet (34) de ladite aube.

8. Aube selon l'une quelconque des revendications 1 à 7, **caractérisée en ce que** la composante tangentielle (48) de l'axe d'empilage de la partie supérieure (42c) s'étend sur une hauteur radiale comprise entre 10% et 25% d'une hauteur radiale totale entre le pied (32) et le sommet (34) de ladite aube.

## Claims

1. A fixed nozzle vane for a compressor of a turbomachine, the vane presenting mutually orthogonal longitudinal, tangential, and radial axes (X, Y, and Z), and having pressure side and suction side surfaces (28, 30) extending radially between a base (32) and a tip (34), and longitudinally between a leading edge (36) and a trailing edge (38), and a plurality of vane sections having centres of gravity in alignment along a stacking axis (40), said vane presenting a lower portion (42a), an intermediate portion (42b), and an upper portion (42c), said lower portion extending radially between the base (32) of the vane and a lower limit (44) of the intermediate portion, and said upper portion extending radially between an upper limit (46) of the intermediate portion and the tip (34) of the vane, the vane being **characterised in that** the stacking axis (40) presents, in the lower and upper portions, a tangential component (48) that extends parallel to the radial axis of the vane, and in the intermediate portion, a tangential component (48) having two slopes with a C-shaped form.

2. A vane according to claim 1, **characterised in that** the tangential component (48) of the stacking axis, in said intermediate portion (42b), comprises a first slope (50a) in the direction opposite the direction of rotation of the disk, and a second slope (50b) in the direction of rotation of said disk.

3. A vane according to claim 2, **characterised in that** said first slope (50a) presents an angle of inclination (α) lying in the range 5° to 45° relative to the radial axis (z) of the vane.

4. A vane according to claim 2 or claim 3, **characterised in that** said second slope (50b) presents an angle of inclination (β) lying in the range 5° to 45° relative to the radial axis (z) of the vane.

5. A vane according to any one of claims 2 to 4, **characterised in that** said first slope (50a) extends radially between the lower limit (44) of the intermediate portion (42b) and a bend point (52) situated between the lower and upper (46) limits of said intermediate portion, and said second slope (50b) extends radially between said bend point and said upper limit.

6. A vane according to claim 5, **characterised in that** the tangential component (48) of the stacking axis of the intermediate portion (42b) occupies a radial height lying in the range 35% to 65% of a total radial height between the base (32) and the tip (34) of said vane.

7. A vane according to any one of claims 1 to 6, **characterised in that** the tangential component (48) of the stacking axis of the lower portion (42a) occupies a radial height lying in the range 10% to 25% of a total radial height between the base (32) and the tip (34) of said vane.

8. A vane according to any one of claims 1 to 7, **characterised in that** the tangential component (48) of the stacking axis of the upper portion (42c) occupies a radial height lying in the range 10% to 25% of a total radial height between the base (32) and the tip (34) of said vane.

## Patentansprüche

1. Feste Schaufel eines Gleichrichters für einen Kompressor einer Turbomaschine mit orthogonalen Längs- (X), Tangential- (Y) und Radialachsen (Z), wobei die Schaufel Innen- (28) und Außenflächen (30) umfaßt, die sich radial zwischen einem Fuß (32) und einer Spitze (34) und in Längsrichtung zwischen einer Vorderkante (36) und einer Austrittskante (38) erstrecken und eine Mehrzahl von Schaufelabschnitten, deren Schwerpunkte entlang von einer Stapelachse (40) ausgerichtet sind, wobei die Schaufel einen unteren Teil (42a), einen mittleren Teil (42b) und einen oberen Teil (42c) aufweist, wobei sich der untere Teil radial zwischen dem Fuß (32) der Schaufel und einer unteren Grenze (44) des mittleren Teils erstreckt und sich der obere Teil radial zwischen einer oberen Grenze (46) und des mittleren Teils und der Spitze (34) der Schaufel erstreckt, **dadurch gekennzeichnet, daß** die Stapelachse (40) auf der Ebene der unteren und oberen Teile eine Tangentialkomponente (48), die sich parallel zur Radialachse der Schaufel erstreckt, und auf der Ebene des mittleren Teils eine Tangentialkomponente (48) mit doppelter Krümmung in C-Form aufweist.

2. Schaufel nach Anspruch 1, **dadurch gekennzeichnet, daß** die Tangentialkomponente (48) der Stapelachse eine erste Krümmung (50a) gegen die Drehrichtung der Scheibe und eine zweite Krümmung (50b) gemäß der Drehrichtung der Scheibe auf der Ebene des mittleren Teils (42b) aufweist.

3. Schaufel nach Anspruch 2, **dadurch gekennzeichnet, daß** die erste Krümmung (50a) eine Biegung (α) aufweist, die in Bezug auf die Radialachse (z) der Schaufel zwischen 5° und 45° liegt.

4. Schaufel nach einem der Ansprüche 2 oder 3, **dadurch gekennzeichnet, daß** die zweite Krümmung (50b) eine Biegung (β) aufweist, die in Bezug auf die Radialachse (z) der Schaufel zwischen 5° und 45° liegt.

5. Schaufel nach einem der Ansprüche 2 bis 4, **dadurch gekennzeichnet, daß** sich die erste Krümmung (50a) radial zwischen der unteren Grenze (44) des mittleren Teils (42b) und einem Wendepunkt (52) erstreckt, der zwischen der unteren und der oberen Grenzen (46) des mittleren Teils liegt und, daß sich die zweite Krümmung (50b) radial zwischen dem Wendepunkt und der genannten oberen Grenze erstreckt.

6. Schaufel nach Anspruch 5, **dadurch gekennzeichnet, daß** sich die Tangentialkomponente (48) der Stapelachse des mittleren Teils (42b) auf einer radialen Höhe erstreckt, die zwischen 35% und 65% einer radialen Gesamthöhe zwischen dem Fuß (32) und der Spitze (34) der genannten Schaufel liegt.

7. Schaufel nach einem der Ansprüche 1 bis 6, **dadurch gekennzeichnet, daß** sich die Tangentialkomponente (48) der Stapelachse des unteren Teils (42a) auf einer radialen Höhe erstreckt, die zwischen 10% und 25% einer radialen Gesamthöhe zwischen dem Fuß (32) und der Spitze (34) der Schaufel liegt.

8. Schaufel nach einem der Ansprüche 1 bis 7, **dadurch gekennzeichnet, daß** sich die Tangentialkomponente (48) der Stapelachse des oberen Teils (42c) auf einer radialen Höhe erstreckt, die zwischen 10% und 25% einer radialen Gesamthöhe zwischen dem Fuß (32) und der Spitze (34) der Schaufel liegt.
